(19) Europäisches Patentamt
European Patent Office
Office européen des brevets

(11) Veröffentlichungsnummer : **0 096 234**
**B1**

(12) # EUROPÄISCHE PATENTSCHRIFT

(45) Veröffentlichungstag der Patentschrift : **30.12.86**

(51) Int. Cl.⁴ : **C 08 F 128/02**, C 08 F 8/12

(21) Anmeldenummer : **83104620.6**

(22) Anmeldetag : **11.05.83**

(54) **Polymerisate und Verfahren zu ihrer Herstellung.**

(30) Priorität : **25.05.82 DE 3219642**

(43) Veröffentlichungstag der Anmeldung : **21.12.83 Patentblatt 83/51**

(45) Bekanntmachung des Hinweises auf die Patenterteilung : **30.12.86 Patentblatt 86/52**

(84) Benannte Vertragsstaaten : **CH DE GB IT LI**

(56) Entgegenhaltungen : **DE-A- 2 014 383**

(73) Patentinhaber : **BAYER AG**
**Konzernverwaltung RP Patentabteilung**
**D-5090 Leverkusen 1 Bayerwerk (DE)**

(72) Erfinder : **Bräuer, Wolfgang, Dr.**
**Mozartstrasse 43**
**D-5090 Leverkusen 1 (DE)**
Erfinder : **Korte, Siegfried, Dr.**
**Bambergerstrasse 6**
**D-5090 Leverkusen 1 (DE)**
Erfinder : **Süling, Carlhans, Dr.**
**Carl-Leverkus-Strasse 10**
**D-5068 Odenthal (DE)**

**EP 0 096 234 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Unipolymerisate und davon abgeleitete Polymerisate und Verfahren zu ihrer Herstellung, insbesondere durch anionische Polymerisation.

Es ist bereits bekannt (Makromol. Chem. *44-46*, 95 (1961) ; Makromol. Chem. *182*, 393 (1981) : J. of Am. Chem. Soc. *72*, 1305, 3127 (1950), daß ethylenisch ungesättigte Monomere, die an einem C-Atom zwei elektronenanziehende Gruppen wie CN oder Alkoxycarbonyl aufweisen, durch einen anionisch oder radikalisch wirkenden Starter, z. T. schon durch Luftfeuchtigkeit, polymerisiert werden. Sie werden daher als hochreaktive Einkomponentenkleber eingesetzt.

Polymere aus Monomeren mit zwei elektronenanziehenden Gruppen am gleichen C-Atom, wovon eine eine gegebenenfalls derivatisierte Sulfonsäuregruppe ist, sind bisher nicht bekannt geworden.

Von diesen Produkten ist zu erwarten, daß sie im Gegensatz zu den vorbekannten Polymeren wasserlöslich sind oder zu wasserlöslichen Produkten umgesetzt werden können.

Es wurden nun Polymerisate aus ethylenisch ungesättigten Monomeren gefunden, die an einem C-Atom zwei unterschiedliche, elektronenanziehende Gruppen aufweisen, von denen eine eine gegebenenfalls derivatisierte Sulfonsäuregruppe ist, und die in einfacher Weise zugänglich sind. Die Polymerisate sind entweder wasserlöslich oder lassen sich zu wasserlöslichen Polymerisaten umsetzen.

Gegenstand der Erfindung sind daher Unipolymerisate mit wiederkehrenden Struktureinheiten der Formel

$$\begin{array}{c} CO_2R_1 \\ | \\ -CH_2-C- \\ | \\ SO_3R_2 \end{array}$$

worin $R_1$ und $R_2$ gleiches oder unterschiedliches $C_1$-$C_4$-Alkyl bedeuten sowie davon durch polymeranaloge Umwandlung abgeleitete, von den vorstehenden Unipolymeren verschiedene Polymerisate, die zusätzlich oder ausschließlich Struktureinheiten der Formel

$$\begin{array}{c} CO_2R_3 \\ | \\ -CH_2-C- \\ | \\ SO_2R_4 \end{array}$$

enthalten, worin $R_3$ Wasserstoff oder $C_1$-$C_4$-Alkyl und $R_4$ Hydroxy, Halogen, einen aliphatischen oder aromatischen Rest oder eine primäre oder sekundäre aliphatisch und/oder aromatisch substituierte Aminogruppe bedeuten.

Aliphatische Reste $R_4$ oder als Substituenten der Aminogruppe sind insbesondere $C_1$-$C_4$-Alkyl-Reste, vorzugsweise Methyl oder Ethyl. Aromatische Reste $R_4$ oder als Substituenten der Aminogruppe sind insbesondere Phenyl und Tolyl. Halogen ist insbesondere Fluor, Chlor oder Brom.

Bevorzugte abgeleitete wasserlösliche Polymerisate sind solche in denen $R_3$ Wasserstoff oder Methyl und/oder $R_4$ Hydroxy bedeuten.

Die abgeleiteten Struktureinheiten der Formel

$$\begin{array}{c} CO_2R_3 \\ | \\ -CH_2-C- \\ | \\ SO_2R_4 \end{array}$$

machen 5 bis 100 Mol-% des Polymerisates aus.

Für den Fall, daß $R_3$ Wasserstoff und/oder $R_4$ Hydroxyl bedeutet, somit eine Carboxyl- und/oder eine Sulfonsäuregruppe vorliegt, sollen die Salze mit umfaßt sein, wobei Alkali-, Erdalkali-, Zink-, Magnesium-, Aluminium- und Ammoniumsalze bevorzugt sind.

Die Polymerisate werden durch radikalische oder insbesondere anionische Polymerisation von Monomeren der Formel

$$\begin{array}{l} CH_2=C-CO_2R_1 \\ \quad\quad\;\; | \\ \quad\quad SO_3R_2 \end{array}$$

worin $R_1$ und $R_2$ die oben aufgeführte Bedeutung haben und gegebenenfalls weitere polymeranaloge Umsetzung an den Estergruppen hergestellt.

Beispiele für weitere Reaktionen an der Sulfonsäureestergruppe sind die Verseifung zur Sulfonsäuregruppe, die Umsetzung zur Sulfohalogenidgruppe und die Überführung der Sulfonsäuregruppe in die Sulfonatform oder die Überführung der Sulfohalogenidgruppe in die Sulfonamid- oder in die Alkyl- oder

Arylsulfongruppe. Ein Beispiel für eine weitere Reaktion an der Carbonsäureestergruppe ist die Verseifung zur Carbonsäuregruppe. Als Sulfohalogenide sind insbesondere die Sulfochloride und -fluoride zu nennen.

Die Monomeren werden durch Umsetzung von α, β-ungesättigten Carbonsäureestern der allgemeinen Formel

$$CH_2 = CH—CO_2R_1$$

mit 0,6 bis 1,6 Moläquivalenten Schwefeltrioxid und gegebenenfalls mit 0,1 bis 10 Moläquivalenten eines Alkylierungsmittels, jeweils bezogen auf den ungesättigten Ester, bei Temperaturen von — 10 bis + 25 °C und anschließendes Erhitzen des Reaktionsgemisches auf Temperaturen von 70 bis 200 °C erhalten und durch Destillation isoliert. Vorzugsweise wird die Umsetzung der α, β-ungesättigten Carbonsäureester bei 0 bis + 10 °C mit 0,8 bis 1,2 Moläquivalenten Schwefeltrioxid vorgenommen, wobei gegebenenfalls 0,2 bis 5 Moläquivalente Dimethylsulfat zugesetzt werden.

Bevorzugte Monomere sind 2-Alkoxysulfonylpropensäurealkylester, insbesondere 2-Methoxy- und 2-Ethoxysulfonylpropensäuremethyl- bzw. -ethylester. Die Initierung der Polymerisation ist mit üblichen radikalisch oder anionisch wirkenden Startersystemen möglich. Besonders geeignet sind anionisch wirkende Startersubstanzen, wie Triphenylphosphin, Triethylamin, n-Butyllithium, Kalium-t-butylat, Natriummethylat, Natriumcarbonat, Pyridin, Triethylphosphit, Natrium und Alkalisalze der Benzolsulfonamide.

Grundsätzlich sind alle Polymerisationsmethoden, wie Polymerisation in Substanz, in Lösung oder in Suspension möglich. Da die Polymerisation in Substanz bei größeren Ansätzen Probleme bei der Wärmeabfuhr und beim kontrollierten Einmischen des Starters mit sich bringt und die Polymerisation in Lösung wegen der geringen Auswahl von Lösungsmittel für die Monomeren und Polymeren nur eine eingeschränkte Bedeutung hat, ist die Polymerisation in Suspension vorzuziehen. Man kann dabei entweder ein Medium wählen, in dem das Monomer löslich ist und das Polymere ausfällt (Fällungspolymerisation) oder ein Medium, in dem auch das Monomer unlöslich ist und gegebenenfalls mit Hilfe eines Dispergiermittels dispergiert wird (Suspensionspolymerisation). Geeignete Dispergiermittel sind z. B. die in aprotischen Solventien löslichen, von langkettigen Alkoholen oder Aminen abgeleiteten Acryl- und Methacrylsäureester, bzw. Acryl- und Methacrylsäureamide. Als Reaktionsmedium kommen alle Lösungsmittel, die mit den Monomeren nicht reagieren, in Frage, z. B. Hexan, Pentan, Ligroin, Cyclohexan, Schwefelkohlenstoff, Acetonitril, Dimethylsulfoxid, Dimethylformamid, Halogenkohlenwasserstoff, Tetrahydrofuran, Diethylether und Benzol sowie Toluol. Die Durchführung der Polymerisation kann als Batch-, Semi-Batch-Verfahren oder kontinuierlich erfolgen.

Bei der Aufarbeitung in Gegenwart von Wasser fallen die Polymerisate mit teilweise zu Sulfonsäuregruppen hydrolysierten Sulfonestergruppierungen an. Durch Rühren des Polymerisates in wäßriger Lösung läßt sich die Hydrolyse der Sulfonestergruppen zu freien Sulfonsäuregruppen vervollständigen.

Somit sind Polymerisate mit teilhydrolysierter Struktur herstellbar, so daß sich die Löslichkeitseigenschaften der Polymerisate in weiten Grenzen beeinflussen lassen. Der Gehalt an Sulfonsäuregruppen im Polymerisat läßt sich durch zügige Titration mit wäßriger Natronlauge bestimmen.

Das Molekulargewicht der Polymerisate beträgt je nach Reaktionsbedingungen und Starterkonzentration zwischen 500 und 1 000 000. Die Polymere lösen sich gut in Dimethylsulfoxid und in Wasser ; die Lösungen in diesen Lösungsmitteln weisen eine hohe Viskosität auf.

Die Polymerisate können als Verdickungsmittel, als Flokkungsmittel oder als Bindemittel dienen. Auch als polymere Additive in der Erdölförderung sowie als Färbeadditive für Polyacrylnitril-Fasern sind sie geeignet.

Die in den Beispielen angeführten Grenzviskositätszahlen bzw. relativen Viskositäten wurden gemäß M. Hoffmann et al, Polymeranalytik I, S. 314 (1977) in Dimethylsulfoxid oder in wäßriger Kochsalzlösung (0,9 %) gemessen.

## Beispiel 1

2-Methoxysulfonylpropensäuremethylester

a. Herstellung eines Gemisches aus 2-Sulfo-propensäuremethylester und 2-Methoxysulfonyl-propensäuremethylester

In eine Vorlage von 506 g Acrylsäuremethylester, stabilisiert mit 2 g Hydrochinon, werden bei 0 bis 10 °C unter Einleiten eines schwachen Inertgas- Stromes 471 g Schwefeltrioxid in flüssiger Form eingerührt. Nach 2-stündigem Tempern des primär entstandenen Gemisches bei 100 °C werden im Vakuum leicht flüchtige Bestandteile — überwiegend nicht umgesetzter Acrylsäuremethylester und bei der Umsetzung anfallendes Dimethylsulfat — abdestilliert. Anschließend wird das vorliegende Rohgemisch unter folgenden Bedingungen in einen Dünnschichtverdampfer eingetragen :

| | |
|---|---|
| Temperatur des Heizmantels : | 158 °C |

eingestellter Druck : 0,5 bis 1,0 mbar
Durchsatzmenge : 1,0 kg/$m^2$h

Man erhält als Kondensat ein nahezu farbloses Öl, bestehend aus 2-Sulfopropensäuremethylester und 2-Methoxysulfonyl-propensäuremethylester, aus dem sich die Säure teilweise als kristalline Phase ausscheidet.

Ausbeute : 622 g (64 Gew.-%, bezogen auf die eingesetzten Komponenten Acrylsäuremethylester und $SO_3$).

NMR-spektroskopisch läßt sich die folgende Zusammensetzung ableiten :

60 Gew.-% 2-Sulfo-propensäuremethylester und 40 Gew.-% 2-Methoxysulfonyl-propensäuremethylester.

b. Isolierung von 2-Methoxysulfonyl-propensäuremethylester

Das bei der Dünnschichtdestillation anfallende, aus Sulfonsäure und Sulfonsäureester bestehende Gemisch wird unter kurzzeitigem Aufheizen mit 500 g Benzol verrührt. Nach Abkühlen scheidet sich der 2-Sulfopropensäuremethylester mit hoher Reinheit in kristalliner Form ab.

Das nach Ausfällung und Abtrennen der Sulfonsäure verbleibende Filtrat wird unter Abdampfen des Benzols eingeengt. Der Rückstand wird unter Fraktionierung destilliert. Die bei 93 °C und 0,4 mbar übergehende Fraktion besteht aus 2-Methoxysulfonylpropensäuremethylester.

Ausbeute : 108 g (10,5 Gew.-%, bezogen auf die eingesetzten Komponenten Acrylsäuremethylester und $SO_3$).

Schmelzpunkt : 25-30 °C $^1$H-NMR-Spektrum (in $d_3$-Acetonitril) : 3,85 (s), 3,9 (s), 6,9 (d), 7,02 (d) ppm.

## Beispiel 2

Poly-2-methoxysulfonylpropensäuremethylester

1. 240 g 2-Methoxysulfonylpropensäuremethylester werden unter Stickstoff in 360 g Acetonitril gelöst.

Nach Abkühlen auf —30 °C bis —40 °C werden 2,4 g Natriummethylat zugegeben und die Mischung 2 Stunden gerührt. Das Polymerisat wird abfiltriert und mit Ethanol gewaschen. Nach dem Trocknen erhält man 218 g farbloses Polymerisat (91 % der Theorie).

$[\eta]$ $H_2O$/NaCl = 2,9 dl/g
$[\eta]$ DMSO $\geqslant$ 100 dl/g
$M_{OSM} = 1,95 \cdot 10^4$ (in $H_2O$/NaCl).

Nach Fraktionierung durch Umfällen in Dimethylsulfoxid/Aceton isolierte man 81 Gew.-% des eingesetzten Polymeren mit folgenden Daten :

$[\eta]$ $H_2O$/NaCl = 2,5 dl/g
$M_{OSM} = 1,3 \cdot 10^5$ (in $H_2O$/NaCl)

2. Hydrolyse des Polymerisates

0,54 g des Polymerisates werden in 300 g Wasser gerührt. Folgende Sulfonsäuregehalte des Polymerisates werden durch Titration mit 0,1 n-Natronlauge bestimmt :

Molzahl von Sulfonester-Einheiten (vor Hydrolyse) 3,00 mmol.
Molzahl von Sulfonsäure-Einheiten (nach Hydrolyse) :

| | |
|---|---|
| a. Hydrolyse 30 min | 2,05 mmol |
| b. Hydrolyse 24 h | 2,35 mmol |
| c. Hydrolyse 64 h | 2,94 mmol |

3. Salzbildung des Polymerisates :

1 g Polymerisat wird in 99 g Wasser verrührt. Die wäßrige Lösung wird anschließend mit Natriummethylat neutralisiert.

| | $\eta_{rel}$ |
|---|---|
| 1 %ige Polymerisatlösung in Wasser : | 38.8 |
| 1 %ige Polymerisatlösung in Wasser mit Natriummethylat neutralisiert : | 7.9 |

## Beispiele 3-12

Die Beispiele 3 bis 12 sind gemäß Beispiel 2 durchgeführt worden. Die Reaktionsbedingungen und die Ergebnisse sind in Tabelle 1 angegeben :

Tableau I

| Beispiele | Polymerisationsart | Monomermenge (g) | Starter (g) | Reaktionsmedium (g) | Temperatur (°C) | Ausbeute (% d.Th.) | $\eta$ rel (0,5% in DMSO) |
|---|---|---|---|---|---|---|---|
| 3 | Fällungspolym. | 40 | 2,5 Kaliumbutylat | 40 DMSO | 20 | 45 | 1,02 |
| 4 | Fällungspolym. | 40 | 2,5 $Na_2CO_3$ | 40 Acetonitril | -20 | 83 | 1,09 |
| 5 | Fällungspolym. | 40 | 1,5 Butyllithium | 40 Ethylether | -20 | 100 | 1,04 |
| 6 | Fällungspolym. | 40 | 2 $N(C_2H_5)_3$ | 40 $CH_2Cl_2$ | 20 | 70 | 1,48 |
| 7 | Fällungspolym. | 40 | 6 Triphenylphosphin | 80 $CH_2Cl_2$ | 20 | 89 | 1,12 |
| 8 | Lösungspolym. | 250 | 20 Triphenylphosphin | 280 DMSO | 20 | 71 | 1,10 |
| 9 | Lösungspolym. | 180 | 5 $N(C_2H_5)_3$ | 540 $CH_2Cl_2$ + 180 DMSO | -65 | 99 | 1,38 |
| 10 | Lösungspolym. | 40 | 4 Kaliumsalz des N-Methylbenzolsulfonamids | 40 Acetonitril | 20 | 85 | 1,18 |
| 11 | Fällungspolym. | 50 | 0,7 Pyridin | 500 Tetrahydrofuran | -40 | 100 | 1,19 |
| 12 | Lösungspolym. | 50 | 14 Triethylphosphit | 500 Toluol | 10 | 40 | 1,15 |

Beispiel 13

9,9 g 2-Methoxysulfonylpropensäuremethylester werden in 23 g n-Hexan unter intensivem Rühren unter Stickstoff suspendiert. Nach dem Abkühlen auf — 30 °C wird die Reaktion durch Zugabe von 0,12 g n-Butyllithium gestartet.

Nach 2 Stunden wird analog Beispiel 2 aufgearbeitet. Man erhält 4,2 g Polymerisat (43 % der Theorie).

$\eta_{rel}$ : 1,19 (0,2 Gew.-% in DMSO).

**Patentansprüche**

1. Unipolymerisate mit wiederkehrenden Struktureinheiten der Formel

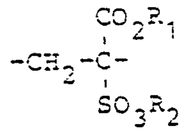

worin $R_1$ und $R_2$ gleiches oder verschiedenes $C_1$-$C_4$-Alkyl, bedeuten sowie davon durch polymeranaloge Umwandlung abgeleitete, von den vorstehenden Unipolymeren verschiedene Polymerisate, die zusätzlich oder ausschließlich Struktureinheiten der Formel

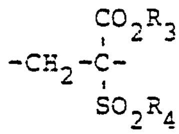

enthalten, worin $R_3$ Wasserstoff oder $C_1$-$C_4$-Alkyl und $R_4$ Hydroxy, Halogen, einen aliphatischen oder aromatischen Rest oder eine primäre oder sekundäre aliphatisch und/oder aromatisch substituierte Aminogruppe bedeuten.

2. Polymerisate gemäß Anspruch 1, worin $R_3$ Wasserstoff oder Methyl und/oder $R_4$ Hydroxy bedeuten.

3. Verfahren zur Herstellung von Unipolymerisaten nach Anspruch 1, dadurch gekennzeichnet, daß man Monomere der Formel

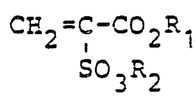

worin $R_1$ und $R_2$ gleiches oder verschiedenes $C_1$-$C_4$-Alkyl bedeuten, radikalisch oder anionisch polymerisiert.

4. Verfahren zur Herstellung von Polymeren mit 5 bis 100 Mol-% wiederkehrenden Einheiten der Formel

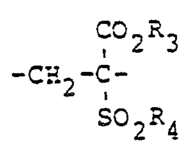

worin $R_3$ und $R_4$ die in Anspruch 1 angegebene Bedeutung besitzen, dadurch gekennzeichnet, daß man die Unipolymerisate gemäß Anspruch 1 an der Carbonsäureester- und/oder Sulfonsäureestergruppe verseift und ggf. letztere in die Sulfohalogenid-, Sulfonamid- oder Sulfongruppe überführt.

5. Verfahren nach Anspruch 3, dadurch gekennzeichnet, daß man anionisch polymerisiert.

6. Verfahren nach Anspruch 3, dadurch gekennzeichnet, daß man unter den Bedingungen der Fällungspolymerisation polymerisiert.

**Claims**

1. Unipolymers having recurring structural units of the formula

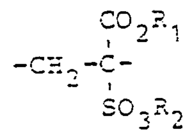

wherein $R_1$ and $R_2$ denote identical or different $C_1$-$C_4$ alkyl, and polymers which differ from the abovementioned unipolymers, are derived therefrom by a polymer-analogous conversion and additionally or exclusively contain structural units of the formula

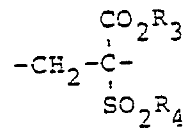

wherein $R_3$ denotes hydrogen or $C_1$-$C_4$-alkyl, and $R_4$ denotes hydroxyl, halogen, an aliphatic or aromatic radical, or a primary or secondary aliphatically and/or aromatically substituted amino group.

2. Polymers according to claim 1, wherein $R_3$ denotes hydrogen or methyl, and/or $R_4$ denotes hydroxyl.

3. Process for the production of unipolymers according to claim 1, characterised in that monomers of the formula

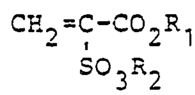

wherein $R_1$ and $R_2$ denote identical or different $C_1$-$C_4$ alkyl, are subjected to radical or anionic polymerisation.

4. Process for the production of polymers containing 5 to 100 mol % of recurring units of the formula

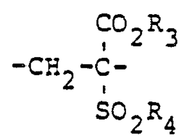

wherein $R_3$ and $R_4$ have the meaning given in Claim 1, characterised in that the unipolymers according to claim 1 are saponified at the carboxylic acid ester group and/or at the sulphonic acid ester group, and the latter is optionally converted into the sulphohalide group, the sulphonamide group or the sulphone group.

5. Process according to claim 3, characterised in that polymerisation is carried out anionically.

6. Process according to claim 3 characterised in that polymerisation is carried out under the conditions of precipitation polymerisation.

**Revendications**

1. Unipolymérisats à motifs structuraux récurrents de formule

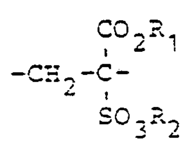

dans laquelle $R_1$ et $R_2$ représentent le même groupe alkyle en $C_1$ à $C_4$, ou des groupes alkyle en $C_1$ à $C_4$ différents, de même que polymérisats différents des unipolymères mentionnés ci-dessus, dérivés de ces motifs par transformation avec analogie polymérique, qui contiennent en outre ou exclusivement des motifs structuraux de formule

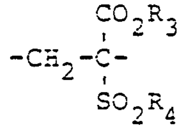

dans laquelle $R_3$ est l'hydrogène ou un groupe alkyle en $C_1$ à $C_4$ et $R_4$ est un groupe hydroxy, un halogène, un reste aliphatique ou aromatique ou un groupe amino primaire ou secondaire à substitution aliphatique et/ou aromatique.

2. Polymérisats suivant la revendication 1, dans lesquels $R_3$ désigne l'hydrogène ou le groupe méthyle et/ou $R_4$ est un groupe hydroxy.

3. Procédé de production d'unipolymérisats suivant la revendication 1, caractérisé en ce qu'on effectue la polymérisation radicalaire ou anionique de monomères de formule

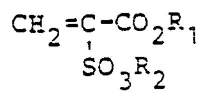

dans laquelle $R_1$ et $R_2$ représentent des groupes alkyle en $C_1$ à $C_4$ identiques ou différents.

4. Procédé de production de polymères ayant 5 à 100 moles % de motifs récurrents de formule

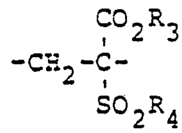

dans laquelle $R_3$ et $R_4$ ont la définition indiquée dans la revendication 1, caractérisé en ce qu'on saponifie les unipolymérisats suivant la revendication 1 sur le groupe ester d'acide carboxylique et/ou ester d'acide sulfonique et, le cas échéant, on transforme ce dernier en groupe sulfohalogénure, sulfamido ou sulfo.

5. Procédé suivant la revendication 3, caractérisé en ce qu'on effectue une polymérisation anionique.

6. Procédé suivant la revendication 3, caractérisé en ce qu'on effectue la polymérisation dans les conditions d'une polymérisation par précipitation.